# EUROPEAN PATENT SPECIFICATION

(11) **EP 3 253 544 B1**
(45) Date of publication and mention of the grant of the patent: **15.01.2020**
(21) Application number: 16705585.4
(22) Date of filing: 29.01.2016
(51) Int. Cl.: B27K 3/16, B27K 3/20, B27K 3/34, B27K 3/52, C08H 8/00, C09K 21/06, C09K 21/10, C09K 21/12, C08L 97/02

(54) **FIRE RESISTANT WOODEN BODY AND METHOD FOR PRODUCING THEREOF**
FEUERBESTÄNDIGER HOLZKÖRPER UND VERFAHREN ZUR HERSTELLUNG DAVON
CORPS EN BOIS IGNIFUGE ET PROCÉDÉ POUR LE PRODUIRE

(30) Priority: 02.02.2015 IT TO20150073
(43) Date of publication of application: 13.12.2017
(73) Proprietor: Coex S.r.l., 20123 Milano (MI) (IT)
(72) Inventor: TONANI, Alberto, 13030 Casanova Elvo (VC) (IT); NOVELLO, Andrea, 13836 Cossato (BI) (IT); SIRNA, Calogero, 29010 Ziano Piacentino (PC) (IT); PESARO, Simona, 27100 Pavia (IT)
(74) Representative: Freyria Fava, Cristina
(86) International application number: PCT/IB2016/050459
(87) International publication number: WO 2016/125058

(56) References cited:
- US-A- 3 811 992
- US-A- 5 076 969

## Description

### FIELD OF THE INVENTION

The present description relates to a method for imparting anti-flame properties to a wooden body and to the relative wooden body.

### TECHNOLOGICAL BACKGROUND

Wood is a material obtained from the trunks of plants, in particular from trees (for example, coniferous and deciduous), but also shrubs.

Plants are characterized by having trunks and branches that grow concentrically outwards from year to year and by having tissues composed mainly of cellulose, hemicellulose and lignin.^{2,3}

The chemical composition of dried wood varies from species to species; in general it comprises about 50% of carbon, 42% of oxygen, 6% of hydrogen, 1% of nitrogen, and 1% of other elements such as calcium, potassium, sodium, magnesium, iron, manganese as well as traces of sulphur, chlorine, silicon, phosphorus and other elements in small quantities.

Water is present in living wood within the cell walls and in the cavities of the tissues.

Wood that is thoroughly air-dried is essentially free of water in the cavities of the tissues, while between 8 and 16% of water is conserved in the cell walls.^{2,3}

The general effect of water content on the wood is to make it softer and more flexible.

Drying therefore produces a significant increase in the strength/resistance of wood; a 5 cm-section of a completely dry block of fir is able to support a permanent load that is four times greater compared to the same undried block.

Wood is made from: 41-43% of cellulose (crystalline polymer derived from glucose), 20-30% of hemicellulose (comprising mainly sugars with five carbon atoms connected to each other in an irregular way) and 23-27% of lignin (which has the function of creating a matrix capable of holding together hemicellulose and cellulose). Lignin confers hydrophobic properties to the woody material since its structure comprises aromatic rings^{2,3}

The chemical structure of cellulose (Figure 1), of hemicellulose (Figure 2) and of lignin (Figure 3) shows the presence of hydroxyl groups available for chemical reactions analogous to the reactions in which primary, secondary and tertiary alcohols can participate.

Since wood is widely used for producing structural and non-structural elements for both private environments and public environments (such as theaters, cinemas, conference rooms, etc.), it is essential to improve the flame resistance of this material.

The combustion of wood takes place when the following elements are present:
- a fuel (wood);
- a comburent, commonly oxygen in the air; and
- a heat source capable of promoting physical and chemical changes on the comburent, in order to initiate combustion of the fuel.

From this moment, the phenomenon of combustion is self-powered by the heat produced.

In the case of wood, the combustion is fed by the formation of various gaseous decomposition products; the main depolymerization product of the cellulose and the hemicellulose is levoglucosan, cellobiose and its oligomers, while in the thermal degradation of lignin, it is difficult to determine the main decomposition product because the process is more complex. The lignin molecule is not, in fact, formed by the repetition of monomeric units equal to each other, it presents a three-dimensional structure and is different from plant to plant.

The precursors of the volatile flammable substances described above are the main contributors to the speed of propagation of the combustion of wood.

Reducing the formation of levoglucosan and other volatile components, formed during thermal degradation of lignin, reduces the amount of volatile flammable components and therefore the combustion capacity of the wood.

To reduce the combustion capacity of the wood, various methods intended to chemically modify the wood itself are carried out.¹

The known techniques comprise immersion of the wood into an aqueous solution with added flame-retardant substances such as borates, phosphates, nitrogenous salts of various nature and their subsequent drying within the substrate, or laminating by painting additive polymers of the same salts so as to obtain a barrier to the flame. For example US 3811992 discloses a method for obtaining wood with anti-flame properties by impregnation with a composition comprising i.a. water ammonium sulphamate and urea.

These methods are not, however, entirely effective and present several disadvantages.

The first disadvantage is related to the additivation process of the wood, which in particular allows aqueous solutions of anti-flame salts to penetrate into the cavities of the wood; unfortunately all additives employed tend to be soluble in water, therefore, it is obvious that subsequent treatments then have to take place which prevent their washout during the life of the product.

The second disadvantage is related to the passive surface protection of the wood, or rather the process of laminating or painting; in fact, a thin layer of flame-retardant is only able to temporarily protect from flames, but a progressive increase of the heat within a wooden body immediately triggers the degradation of the cellulose, hemicellulose and lignin compounds into combustible volatile compounds, triggering the combustion process.

### SUMMARY OF THE INVENTION

The object of the present description is the development of a new method for treating a wooden body capable of imparting improved anti-flame properties to the wooden body and, contextually, not structurally weakening the body itself.

In accordance with the present invention, the aforesaid object is achieved thanks to the solution specifically recalled in the attached claims, which form an integral part of the present description.

The solution provided in the present description consists of the use of phosphonic acids as catalysts of sulphation and phosphorylating agents capable of reacting with the essential components of the wooden body, namely cellulose, hemicellulose and lignin, thus obtaining a wooden body in which cellulose, hemicellulose and lignin are sulphated and phosphorylated.

One embodiment of the present description relates to a wooden body with anti-flame properties having an L.O.I. rating between 30 and 90, more preferably between 60 and 80.

A different embodiment of the present description relates to a method for producing a wooden body with anti-flame properties which involves the following operations:
i) providing a wooden body, preferably a dried wooden body;
ii) preparing a sulphation and phosphorylation solution, preferably under heated conditions, the sulphation and phosphorylation solution comprising water, ammonium sulphamate, urea and at least one compound of the formula (I):

   PO(OH)₂-R-PO(OH)₂ (I)

   wherein
   R represents a linear or branched, substituted or unsubstituted C₁₋₁₀, preferably C₁₋₅, alkyl group; an N(R₁) group; a R₂N(R₃)R₄ group;
   R₁ represents H, a linear or branched, substituted or unsubstituted C₁₋₅, preferably C₁₋₃, alkyl group;
   R₂ and R₄ independently represent a linear or branched, substituted or unsubstituted C₁₋₅, preferably C₁₋₃, alkyl group;
   R₃ represents a linear or branched, substituted or unsubstituted C₁₋₅, preferably C₁₋₃, alkyl group; a R₅N(R₆)R₇ group;
   R₅ and R₇ independently represent a linear or branched, substituted or unsubstituted C₁₋₃, preferably C₁₋₃, alkyl group;
   R₆ represents a linear or branched, substituted or unsubstituted C₁₋₅, preferably C₁₋₃, alkyl group; a R₈N(R₉)R₁₀; group;
   R₈, R₉ and R₁₀ independently represent a linear or branched, substituted or unsubstituted C₁₋₅, preferably C₁₋₃, alkyl group;
      with the proviso that the number of -PO(OH)₂ groups in the general formula (I) is not greater than 5;
iii) immersing the wooden body into the sulphation and phosphorylation solution, preferably at a pressure higher than atmospheric pressure;
iv) extracting the wooden body from the sulphation and phosphorylation solution;
v) maintaining the wooden body at a temperature between 110° and 175°C for a period of time between 1 minute and 12 hours, obtaining at the end a sulphated and phosphorylated wooden body with anti-flame properties.

The method of the present description allows the obtainment of a wooden body with anti-flame properties at every point of its body, which has unaltered physical characteristics with respect to an untreated wooden body.

### BRIEF DESCRIPTION OF THE FIGURES

The invention will now be described in detail, by way of non-limiting example, with reference to the attached figures, wherein:

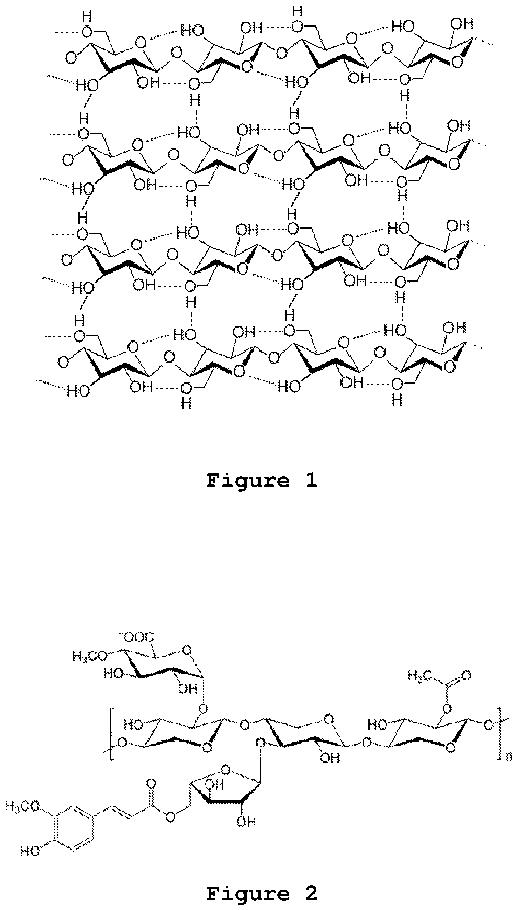

- **Figure 1****:** represents the chemical structure of cellulose.
- **Figure 2****:** represents the chemical structure of hemicellulose.

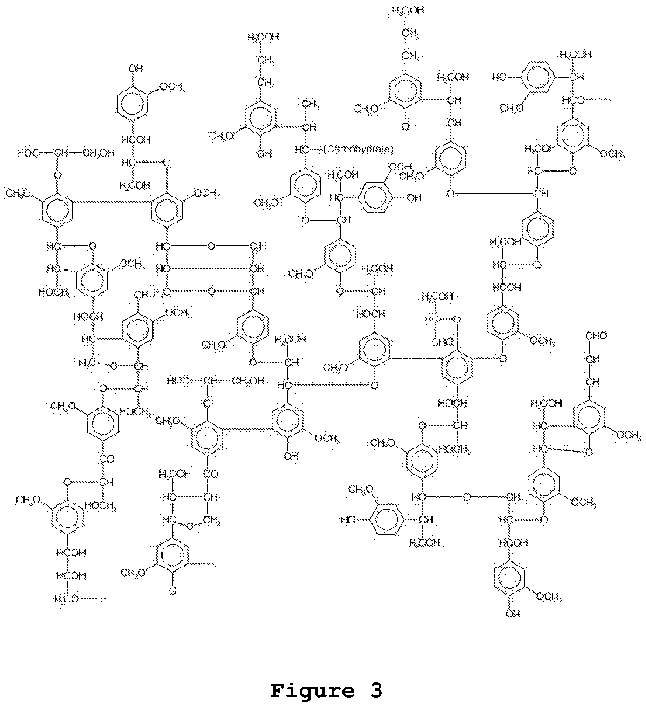

- **Figure 3****:** represents the chemical structure of lignin.

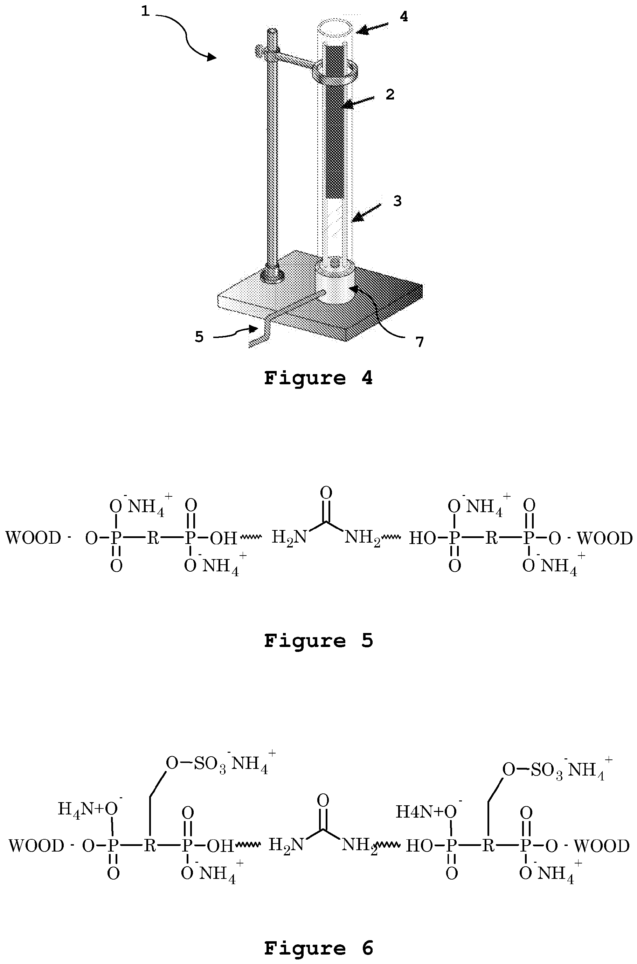

- **Figure 4****:** represents an example of an apparatus for measuring the L.O.I.
- **Figure 5****:** represents the chemical structure of a wooden body wherein the hydroxyl groups contained in the cellulose, hemicellulose and lignin, are subjected to a method of sulphation and phosphorylation according to the present description.
- **Figure 6****:** represents the chemical structure of a wooden body wherein the hydroxyl groups contained in the cellulose, hemicellulose and lignin and in the phosphorylation agent, are subjected to a method of sulphation and phosphorylation according to the present description.

### DESCRIPTION OF THE PREFERRED EMBODIMENTS

The invention will now be described in detail, by way of non-limiting example, with reference to a wooden body, essentially consisting of poplar, with improved anti-flame properties.

It is evident that the scope of this description is not in any way limited to a body of poplar: the method described here is, in fact, applicable to wooden bodies of any plant used for producing structural and non-structural elements.

Furthermore, while the experimental data provided below refer to a wooden body essentially consisting of poplar in the form of a parallelepiped of 80 mm in length, 10 mm in width and 10 mm in thickness, ideal as a technical standard of the L.O.I. UNI EN ISO 4589-2: 2003, the method of the present description is applicable to wooden bodies having any configuration, such as planks, panels, beams, woodchips, sheets, blocks, trunks, slats and any structural and non-structural element comprising at least one portion of wood.

In the following description, there are numerous specific details to provide a thorough understanding of the embodiments. The embodiments may be implemented in practice without one or more of the specific details, or with other methods, components, materials, etc. In other cases, well-known structures, materials or operations are not shown or described in detail to avoid obscuring certain aspects of the embodiments.

Throughout the present specification, the reference to "one embodiment" or "embodiment" means that a particular configuration, structure, or characteristic described in connection with the embodiment is included in at least one embodiment. Therefore, the appearance of phrases "in one embodiment" or "in a certain embodiment" in various sites throughout the entire present specification does not necessarily refer to the same embodiment. Moreover, the particular configurations, structures or characteristics can be combined in any convenient way in one or more embodiments.

The headers presented here serve merely for convenience and do not interpret the object or meaning of the embodiments.

In the present description, the expression "wooden body" means a body obtained from the trunk and/or the branches of a plant or a shrub, essentially consisting of cellulose, hemicellulose and lignin.

One embodiment of the present description relates to a wooden body subjected to chemical treatment for imparting anti-flame properties to the wooden body, wherein the treated wooden body has an L.O.I. between 30 and 90, more preferably between 60 and 80.

One embodiment of the present description relates to a method of sulphation and phosphorylation of a wooden body for imparting anti-flame properties to the wooden body, characterized by the use of at least one phosphonic acid to catalyze the sulphation and to function as a phosphorylating agent capable of reacting with the hydroxyl groups present in the essential constituents of a wooden body, namely cellulose, hemicellulose and lignin.

The phosphonic acids that can be used in the context of the method described herein are organic compounds that contain 2 to 5 phosphonic groups.

In one embodiment, the phosphonic acids used in the context of the method described here are represented by the general formula (I):

PO(OH)₂-R-PO(OH)₂ (I)

wherein
R represents a linear or branched, substituted or unsubstituted C₁₋₁₀, preferably C₁₋₅, alkyl group; an N-R₁ group; a R₂N(R₃)R₄ group;
R₁ represents H, a linear or branched, substituted or unsubstituted C₁₋₅, preferably C₁₋₃, alkyl group;
R₂ and R₄ independently represent a linear or branched, substituted or unsubstituted C₁₋₅, preferably C₁₋₃, alkyl group,
R₃ represents a linear or branched, substituted or unsubstituted C₁₋₁₀, preferably C₁₋₅, alkyl group; a R₅N(R₆)R₇ group;
R₅ and R₇ independently represent a linear or branched, substituted or unsubstituted C₁₋₅, preferably C₁₋₃, alkyl group;
R₆ represents a linear or branched, substituted or unsubstituted C₁₋₁₀, preferably C₁₋₅, alkyl group; a R₈N(R₉)R₁₀ group;
R₈, R₉ and R₁₀ independently represent a linear or branched, substituted or unsubstituted C₁₋₅, preferably C₁₋₃, alkyl group;
with the proviso that the number of -PO(OH)₂ groups in the general formula (I) is not greater than 5;

In one embodiment, when any one of the groups R₁, R₂, R₃, R₄, R₅, R₆, R₇, R₈, R₉, R₁₀, if present, represents a substituted alkyl group, the one or more substituents are independently selected from -OH,-COOH, -PO(OH)₂, -NH₂, -NHR₁₁, -NR₁₂R₁₃, -Cl, -Br, -F,
wherein
R₁₁, R₁₂ and R₁₃ independently represent a linear or branched, substituted or unsubstituted C₁₋₅, preferably C₁₋₃, alkyl group;
with the proviso that the number of -PO(OH)₂ groups in the general formula (I) is not greater than 5;

In one embodiment, when any of the groups R₁₁, R₁₂ and R₁₃, if present, represents a substituted alkyl group, one or more substituents are represented by the group -PO(OH)₂, with the proviso that the number of groups -PO(OH)₂ in the general formula (I) is not more than 5.

In one embodiment, the R₂, R₄, R₅ and R₈ groups, if present, independently represent an unsubstituted alkyl group.

In one embodiment, when the groups R₃, R₆, R₇, R₉ and R₁₀, if present, independently represent a substituted alkyl group, one or more substituents are represented by the group -PO(OH)₂, with the proviso that the number of groups -PO(OH)₂ in the general formula (I) is not more than 5.

In one embodiment, phosphonic compounds of formula (I) that can be used in the method described herein are: 1-hydroxyethan-1,1-diphosphonic acid, hydroxyethyl-imino-bis-(methylene-phosphonic) acid, amino-tris-(methylene phosphonic) acid, ethylene diamine tetra-(methylene phosphonic) acid, diethylentriamine-penta-(methylene phosphonic) acid, (1-aminoethylidene) bisphosphonic acid, oxidronic acid, pamidronic acid, alendronic acid, (1-hydroxy-2-methyl-1-phosphonopropyl) phosphonic acid, (aminomethylene) bisphosphonic acid, 1-hydroxypentane-1,1-bisphosphonic acid, [(2-hydroxypropan-1,3-diyl) bis(nitrilodimethanediyl)] tetrakis-phosphonic acid, clodronic acid, (difluoromethylene) bisphosphonic acid, (dibromomethylene) bisphosphonic acid, (hydroxymethan) bisphosphonic acid.

In one embodiment, the method of sulphation and phosphorylation of a wooden body envisages the following operations:
i) providing a wooden body, preferably a dried wooden body;
ii) preparing a sulphation and phosphorylation solution, preferably under heated conditions, the sulphation and phosphorylation solution comprising water, ammonium sulphamate, urea or guanidine and at least one compound of the formula (I) as defined above;
iii) immersing the wooden body into the sulphation and phosphorylation solution, preferably at a pressure higher than atmospheric pressure;
iv) extracting the wooden body from the sulphation and phosphorylation solution;
v) maintaining the wooden body at a temperature between 110° and 175°C for a period of time between 1 minute and 12 hours, obtaining at the end a sulphated and phosphorylated wooden body with anti-flame properties.

In one embodiment, before the operation iii) the wooden body is subjected to an outgassing operation at a pressure lower than atmospheric pressure.

In one embodiment, during step iii) the pressure is equal or greater than 1.1 bars.

In one embodiment, prior to operation v) the wooden body extracted from the sulphation and phosphorylation solution is subjected to a dripping and heat-drying operation, preferably at a temperature between 50 and 90°C.

In one embodiment, at the end of the operation v) the wooden body is subjected to a washing operation, preferably under heated conditions, and heat-drying, preferably at a temperature between 70 and 90°C.

In one embodiment, the sulphation and phosphorylation solution is prepared by mixing, in the following order, water, urea, at least one phosphonic acid of formula (I) and ammonium sulphamate.

In one embodiment, the sulphation and phosphorylation solution contains:
- water in a quantity between 80 and 25% w/w, preferably between 50 and 60% w/w,
- urea or guanidine in a quantity between 10 and 30% w/w, preferably between 10 and 20% w/w,
- at least one phosphonic acid of formula (I) in an quantity between 5 and 30% w/w, preferably between 10 and 20% w/w, and
- ammonium sulphamate in a quantity between 5 and 30% w/w, preferably 8 and 15% w/w.

Without wishing to be bound to any one theory in this regard, the inventors have reason to believe that the reactions of sulphation and phosphorylation of a wooden body according to the present description can be illustrated as shown in Diagram I, obtaining a wooden body in which the hydroxyl content in the cellulose, hemicellulose and lignin give rise to compounds of a structure as illustrated in Figure 5.

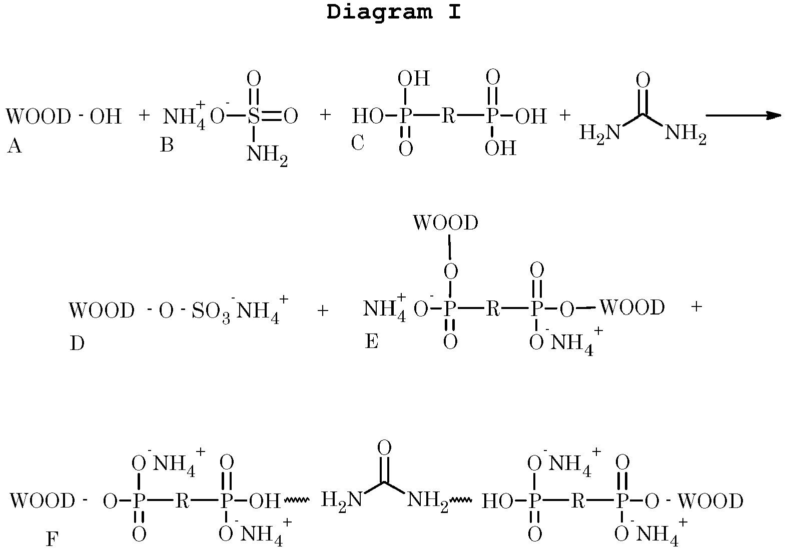

In one embodiment, when the compound of formula (I) contains an alkyl group substituted with a primary hydroxyl, the inventors have reason to believe that this hydroxyl group is in a condition to react with the ammonium sulphamate compound.

By way of example, when the group R represents an alkyl group substituted with a primary hydroxyl group, the inventors have reason to believe that the reactions of sulphation and phosphorylation of a wooden body according to the present description can be illustrated as shown in Diagram II, obtaining a wooden body in which the hydroxyl content in the cellulose, hemicellulose, lignin and in the phosphorylating agent give rise to compounds of a structure as illustrated in Figure 6.

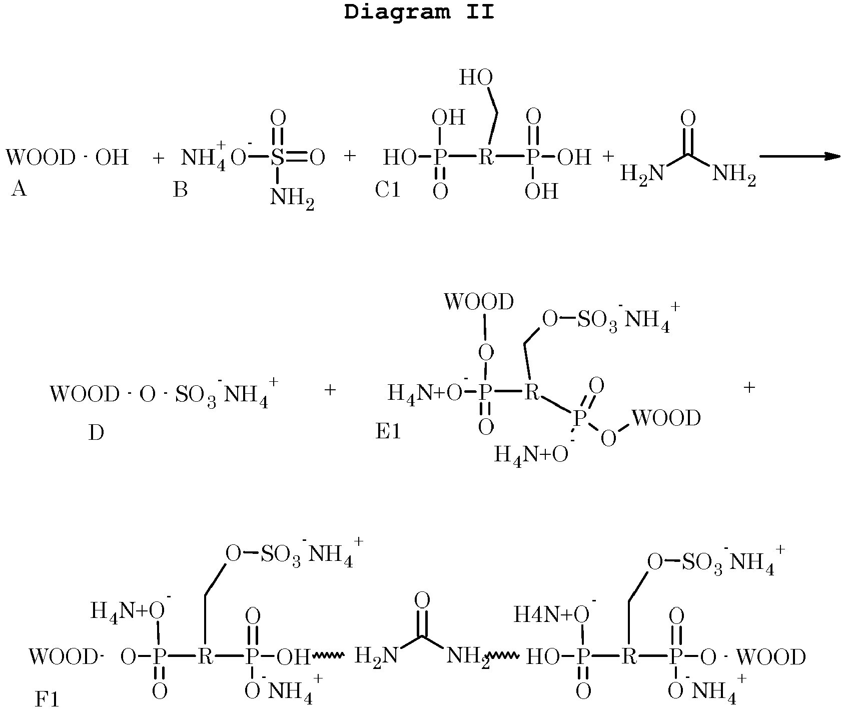

The phosphonic acids of formula (I) contain from 2 to 5 free phosphonic groups, capable of reacting, either all or in part, with the free hydroxyl groups of the cellulose, hemicellulose and lignin, which entails a high ability of these compounds to bind to hydroxyls present in the wooden body.

The anti-flame properties of the wooden body subjected to the method of sulphation and phosphorylation according to the present description are better compared to what is obtainable with the known methods, as there is a massive synergistic presence of sulphur, nitrogen and phosphorus linked to the wooden body, without weakening it.

The use of the phosphonic acids of formula (I) enables, in an unexpected way, the simultaneous conduction of the reactions of sulphation and phosphorylation. The kinetics of the reaction are relatively fast.

Even from the first minutes of the reaction, and starting from a temperature of 110°C, an excellent degree of sulphation is obtained.

Without wishing to be bound to any one theory in this regard, the inventors have reason to believe that the aqueous solution based on phosphonic acids, urea and ammonium sulphamate in the heating step results in, as well as a partial evaporation of the water, the formation of a liquid and oily mass with a pH approximately equal to 2 which, penetrating within the fibrils of the wood, creates an ideal condition of acidity for the solid-liquid reaction of sulphation and phosphorylation of the wooden body, even at temperatures in the order of 100-110°C.

In particular, the inventors have reason to believe that urea is able to create complexes with the phosphonic acids, where these complexes are more soluble in an aqueous environment with respect to the phosphonic acids alone, thus allowing a nearly quantitative reaction of these compounds with the hydroxyl groups present in the cellulose, hemicellulose and lignin constituting the wooden body.

It is important to emphasize that a method of sulphation and phosphorylation in the absence of at least one phosphonic acid of formula (I) shows no sign of sulphation of cellulose, hemicellulose and lignin at temperatures from 110°C to 140°C.

The anti-flame wooden bodies produced with the method of the present description have, indeed, an excellent resistance to washout by water, so that the wood does not have to undergo subsequent treatments to prevent water penetration and to remove any additives; sulphated and phosphorylated compounds have an excellent resistance to hydrolysis.

Furthermore, there are no problems related to the use of highly toxic compounds: the phosphonic acids employed have a low degree of toxicity, a very low volatility and a high thermal stability, the latter being an important feature for reactions performed at elevated temperatures.

Finally, the method of sulphation and phosphorylation described here does not give rise to hazardous gaseous components such as ammonia and urea.

In particular, the use of urea in non-stoichiometric quantities with respect to the phosphonic acid groups of the compound of formula (I) allows the binding of the ammonia developed during the sulphation, and the urea itself, during the step of its passage to the liquid state, thanks to the formation of complexes with phosphonic groups.

The method of the present description allows a wooden body to be produced with improved anti-flame properties and with physical characteristics essentially similar to those of an untreated wooden body, unlike wood bodies produced by means of methods known in the art.

In particular, the presence of chemical groups based on nitrogen, phosphorus and sulphur allows improved anti-flame properties to be obtained.

The sulphur allows the wooden material to degrade at temperatures lower than those of ignition, releasing sulphuric acid, the nitrogen inhibits the flame, forming non-combustible gases and finally the phosphorus, in addition to inhibiting the formation of levoglucosan and other combustible gases in the heating step, forms the compound P₂O₅, allowing a barrier effect to be obtained and preventing the flame from passing through it.

Below, a non-limiting example will be provided of an embodiment of the method of sulphation and phosphorylation of a wooden body according to the present description.

### A) Preparation of the solution for implementing the method of sulphation and phosphorylation:

The sulphation-phosphorylation solution is prepared by mixing, under heated conditions (about 50°C), the following substances in this order: water at 55% w/w, urea at 17% w/w, hydroxyethyl-imino-bis-(methylene-phosphonic) acid at 20% w/w and ammonium sulphamate at 8% w/w.

### B) Preparation of the wooden body.

The wooden body is prepared by means of mechanical processing to obtain samples with the required dimensions, surface type and direction of the fibers. These issues affect the degree of flammability of the material, as specified in the standard UNI EN ISO 4589-2:2008. The sample used has the following characteristics:
Material: poplar
Dimensions:
   Length: 100mm
   Width: 10 ± 0.5 mm
   Thickness: 10 ± 0.5 mm
   Surface: smooth
Cutting direction: longitudinal fiber length.

### C) Description of the method for imparting anti-flame properties

The method of treating the wooden body is by means of two main steps: a first impregnation step and a second step of heat treatment.

The instrumentation used in the process is the following:

### Thermostatic oven with forced ventilation

| | |
|---|---|
| Volume: | 75L (460x390x430mm) |
| Max Temperature: | +260°C |
| Uniformity (+150°C): | ±3.0°C |
| Precision (+150°C): | ±0.3°C |
| Power: | 1300W |

### Laboratory heating pilot autoclave

| | |
|---|---|
| Internal dimensions: | diameter: 75 mm - length: 300mm |
| Min pressure: | -0.8 bars |
| Max pressure: | 5 bars |
| Max Temperature: | 140°C |

### 1. Impregnation

In order that the wooden body has anti-flame properties, it is useful that the solution of sulphation and phosphorylation penetrates within the wooden body as evenly as possible. For this purpose, the following operations are carried out:

### 1.1 Drying

The moisture component of the sample is removed by means of a drying cycle in a ventilated oven at 70°C for 120 min, resulting in a loss of about 7.5% weight.

### 1.2 Outgassing

The sample is inserted into the cylindrical body of the autoclave by means of the stainless steel basket. The suction pump is activated, bringing the conditions of the autoclave to -0.7 bars. For a sample with the indicated specifications, this process has a duration of 30 min.

### 1.3 Filling of the autoclave

The solution of sulphation and phosphorylation is inserted into the autoclave through the opening of a needle valve. For correct impregnation the sample must be completely immersed in the solution.

### 1.4 Pressurizing the autoclave

The pump is activated to take the conditions in the cylindrical body to 4 bars. This pressure allows the uniformity and the rate of penetration of the sulphation and phosphorylation solution to be increased within the sample. To this end, the viscosity of the solution is decreased by heating to 35°C.

This step of the process is conducted for 4 hours and the sample absorbs 70-190% of solution by weight.

### 2. Heat treatment

### 2.1 Drying of the sample

The sample is extracted from the cylinder of the autoclave and left to drain for 2-3 min.

Thereafter it is placed in the oven at 70°C for 120 min to allow evaporation of the aqueous component of the solution. In this step, the sample loses about 50% in weight.

### 2.2 Sulphation and phosphorylation reaction

The sample is brought to 140°C for 3 hours to activate the reaction. In this step, the sample loses from 10 to 25% in weight.

### 2.3 Washing and drying of the sample

The sample is rinsed in running water and dried at 60°C for 3 hours.

### D) Checking of the chemical parameters

To verify the possible present or releasable volatile components from the sample subjected to the method of sulphation and phosphorylation, as described above, a gas chromatography coupled to mass spectrometry analysis was carried out, using the headspace technique.

The treated sample, hermetically sealed in a suitable container, was brought to the required temperature through the use of a thermostatic water-bath, and maintained under these conditions for a certain period of time so as to allow the attainment of equilibrium between the volatile compounds present in the sample and those released by the sample in the vapor phase. A predetermined volume of the headspace (250 µl) was taken with a gas-tight syringe and then injected into a gas chromatograph.

The gas chromatograph used is the Hewlett-Packard 5890 equipped with a 5970 Mass Selective Detector (MSD); the column Supelco SPB-1 - 30 m.

The initial column temperature was set at about 40°C and kept constant for 5 minutes; a heating ramp of 20°C/min was programmed, while raising the temperature from 40 to 250°C. The temperature was kept constant at 250°C for 19 minutes. The injector temperature is 220°C.

The treated sample was analyzed by thermostating at 25°C, 110°C and 130°C for 1 hour.

The analysis did not provide any appreciable result, the chromatogram of the treated sample is, in fact, perfectly comparable to the blank: the treated sample releases no volatile substances, such as ammonia or urea.

### E) Checking of the anti-flame parameters

The treated sample according to the present description was subjected to a test for determining the burning behavior by means of the oxygen index at room temperature using standard technique UNI EN ISO 4589-2:2008.

The limiting oxygen index test (L.O.I.) is employed as an indicator of the flammability of a flame-retardant treated wooden body.

In Figure 4 an apparatus 1 is schematically shown for determining the oxygen index of a sample in the presence of a controlled mixture of nitrogen and oxygen.

A wood sample 2 is positioned on a support 3 at the center of the test column 4. The initial oxygen concentration required is fed through a supply conduit 5 and regulated by a flow valve (not shown) . The flow of oxygen and nitrogen, fed into the test chamber by means of respective feed ducts are regulated by means of respective flow valves (not shown) and injected into the dispersion chamber 7, the gases are uniformly premixed before being inserted into the test column 4. When the sample 2 arrives at the critical concentrations of oxygen, it must develop a flame up to the top of the sample (that is, for its entire height). The concentration of oxygen is greater than the oxygen index if the sample burns for a period of at least 3 minutes after ignition. The concentration of oxygen is below the oxygen index if the sample stops the flame before the criteria discussed above.

The result is expressed as a statistic of average values able to evaluate the critical concentration of oxygen for the analyzed material.

The treated sample reported an L.O.I. value equal to 82.

To verify the resistance to washout by water, the treated sample was immersed in an conical flask of deionized water under agitation for 3 hours; thereafter the sample was dried, dehydrated and conditioned.

The test was repeated and the L.O.I. value did not undergo major changes.

### BIBLIOGRAPHIC REFERENCES

1. Lewin M.; Isaacs P.K. "Imparting flame resistance to materials comprising or impregnated with hydroxy group-containing polymers" From Ger. Offen. (1971), Database: CAPLUS
**2.** John F. Siau; State University College of Foresty at Syracuse University: "Flow in wood" Syracuse University Press (1971) Editor: Wilfred A. Cote
3. Christen Skaar; State University College of Foresty at Syracuse University: "Water in Wood" Syracuse University Press (1972) Editor: Wilfred A. Cote

## Claims

1. A method for sulphation and phosphorylation of a wooden body to impart anti-flame properties to the wooden body comprising the following operations:
i) providing a wooden body, preferably a dried wooden body;
ii) preparing a sulphation and phosphorylation solution, preferably under heated conditions, the sulphation and phosphorylation solution comprising water, ammonium sulphamate, urea and at least one compound of the formula (I):
PO(OH)₂-R-PO(OH)₂ (I)
wherein
R represents a linear or branched, substituted or unsubstituted C₁₋₁₀, preferably C₁₋₅, alkyl group; an N(R₁) group; a R₂N(R₃)R₄ group;
R₁ represents H, a linear or branched, substituted or unsubstituted C₁₋₅, preferably C₁₋₃, alkyl group;
R₂ and R₄ independently represent a linear or branched, substituted or unsubstituted C₁₋₅, preferably C₁₋₃, alkyl group;
R₃ represents a linear or branched, substituted or unsubstituted C₁₋₅, preferably C₁₋₃, alkyl group; a R₅N(R₆)R₇ group;
R₅ and R₇ independently represent a linear or branched, substituted or unsubstituted C₁₋₅, preferably C₁₋₃, alkyl group;
R₆ represents a linear or branched, substituted or unsubstituted C₁₋₅, preferably C₁₋₃, alkyl group; a R₈N(R₉)R₁₀ group;
R₈, R₉ and R₁₀ independently represent a linear or branched, substituted or unsubstituted C₁₋₅, preferably C₁₋₃, alkyl group;
with the proviso that the number of -PO(OH)₂ groups in the general formula (I) is not greater than 5;
iii) immersing the wooden body into the sulphation and phosphorylation solution, preferably at a pressure higher than atmospheric pressure;
iv) extracting the wooden body from the sulphation and phosphorylation solution;
v) maintaining the wooden body at a temperature between 110° and 175°C for a period of time between 1 minute and 5 hours, obtaining at the end a sulphated and phosphorylated wooden body with anti-flame properties.

2. The method for sulphation and phosphorylation according to claim 1, wherein before operation v) the wooden body extracted from the sulphation and phosphorylation solution is subjected to a dripping and heat drying operation, preferably at a temperature between 70 and 90°C.

3. The method for sulphation and phosphorylation according to claim 1 or claim 2, wherein at the end of the operation v) the wooden body is subjected to a washing operation, preferably under heated condition, and heat drying, preferably at a temperature between 70 and 90°C.

4. The method for sulphation and phosphorylation according to any one of claims 1 to 3, wherein before operation iii) the wooden body is subjected to an outgassing operation at a pressure lower than atmospheric pressure.

5. The method for sulphation and phosphorylation according to any one of claims 1 to 4, wherein the sulphation and phosphorylation solution is prepared by mixing, in the following order, water, urea, at least one compound of formula (I) and ammonium sulphamate.

6. The method for sulphation and phosphorylation according to any one of claims 1 to 5, wherein the sulphation and phosphorylation solution contains:
- water in a quantity between 80 and 25% w/w, preferably between 50 and 60% w/w,
- urea in a quantity between 10 and 30% w/w, preferably between 10 and 20% w/w,
- at least one compound of formula (I) in an quantity between 5 and 30% w/w, preferably between 10 and 20% w/w, and
- ammonium sulphamate in a quantity between 5 and 30% w/w, preferably between 8 and 15% w/w.

7. The method of sulphation and phosphorylation according to any one of claims 1 to 6, wherein when any one of the groups R, R₁, R₂, R₃, R₄, R₅, R₆, R₇, R₈, R₉, R₁₀, of the general formula (I), if present, represents a substituted alkyl group, the one or more substituents are independently selected from -OH, -COOH, -PO(OH)₂,-NH₂, -NHR₁₁, -NR₁₂R₁₃, -Cl, -Br, -F, wherein
R₁₁, R₁₂ and R₁₃ independently represent a linear or branched, substituted or unsubstituted C₁₋₅, preferably C₁₋₃, alkyl group.

8. The method for sulphation and phosphorylation according to claim 7, wherein when any one of the groups R₁₁, R₁₂ and R₁₃ of the general formula (I), if present, represents a substituted alkyl group, the one or more substituents are represented by the -PO(OH)₂ group.

9. The method for sulphation and phosphorylation according to any one of claims 1 to 8, wherein the groups R₂, R₄, R₅ and R₈, if present, independently represent an unsubstituted alkyl group.

10. The method for sulphation and phosphorylation according to any one of claims 1 to 9, wherein when the groups R₃, R₆, R₇, R₉ and R₁₀, if present, independently represent a substituted alkyl group, the one or more substituents are represented by the -PO(OH)₂ group.

11. The method for sulphation and phosphorylation according to any one of claims 1 to 10, wherein the at least one phosphonic compound of formula (I) is selected from: 1-hydroxyethan-1,1-bisphosphonic acid, hydroxyethyl-imino-bis-(methylene-phosphonic) acid, amino-tris-(methylene phosphonic) acid, ethylene diamine tetra-(methylene phosphonic) acid, diethylentriamine-penta-(methylene phosphonic) acid, (1-aminoethylidene) bisphosphonic acid, oxidronic acid, pamidronic acid, alendronic acid, (1-hydroxy-2-methyl-1-phosphonopropyl) phosphonic acid, (aminomethylene) bisphosphonic acid, 1-hydroxypentane-1,1-bisphosphonic acid, [(2-hydroxypropan-1,3-diyl) bis(nitrilodimethanediyl)] tetrakis-phosphonic acid, clodronic acid, (difluoromethylene) bisphosphonic acid, (dibromomethylene) bisphosphonic acid, (hydroxymethan) bisphosphonic acid.

12. The method for sulphation and phosphorylation according to any one of claims 1 to 11, wherein the wooden body essentially consists of cellulose, hemicellulose and lignin.

13. The method for sulphation and phosphorylation according to any one of claims 1 to 12, wherein the sulphated and phosphorylated wooden body has an L.O.I. between 30 and 90, more preferably between 60 and 80.

14. The method for sulphation and phosphorylation according to any one of claims 1 to 13, wherein the sulphated and phosphorylated wooden body has physical properties essentially equal to those of an untreated wooden body.

15. A wooden body with anti-flame properties obtained by implementing the method according to any one of claims 1 to 14.

16. Use of a compound of formula (I):
PO(OH)₂-R-PO(OH)₂ (I)
wherein
R represents a linear or branched, substituted or unsubstituted C₁₋₁₀, preferably C₁₋₅, alkyl group; an N(R₁) group; a R₂N(R₃)R₄ group;
R₁ represents H, a linear or branched, substituted or unsubstituted C₁₋₅, preferably C₁₋₃, alkyl group;
R₂ and R₄ independently represent a linear or branched, substituted or unsubstituted C₁₋₅, preferably C₁₋₃, alkyl group;
R₃ represents a linear or branched, substituted or unsubstituted C₁₋₅, preferably C₁₋₃, alkyl group; a R₅N(R₆)R₇ group;
R₅ and R₇ independently represent a linear or branched, substituted or unsubstituted C₁₋₃, preferably C₁₋₃, alkyl group.
R₆ represents a linear or branched, substituted or unsubstituted C₁₋₅, preferably C₁₋₃, alkyl group; a R₈N(R₉)R₁₀; group;
R₈, R₉ and R₁₀ independently represent a linear or branched, substituted or unsubstituted C₁₋₅, preferably C₁₋₃, alkyl group;
with the proviso that the number of -PO(OH)₂ groups in the general formula (I) is not greater than 5;
in a method for sulphation and phosphorylation of a wooden body, the compound of formula (I) acting as a catalytic agent in the sulphation reaction and a phosphorylating agent.

## Patentansprüche

1. Verfahren zur Sulfatierung und Phosphorylierung eines Holzkörpers, um dem Holzkörper Flammschutzeigenschaften zu verleihen, umfassend die folgenden Arbeitsgänge:
i) Bereitstellen eines Holzkörpers, vorzugsweise eines getrockneten Holzkörpers;
ii) Herstellen einer Sulfatierungs- und Phosphorylierungslösung, vorzugsweise unter erwärmten Bedingungen, wobei die Sulfatierungs- und Phosphorylierungslösung Wasser, Ammoniumsulfamat, Harnstoff und wenigstens eine Verbindung der Formel (I) umfasst:
PO(OH)₂-R-PO(OH)₂ (I)
wobei
R eine lineare oder verzweigte, substituierte oder unsubstituierte C₁₋₁₀, vorzugsweise C₁₋₅, Alkylgruppe; eine N(R₁) Gruppe; eine R₂N(R₃)R₄ Gruppe bedeutet;
R₁ H, eine lineare oder verzweigte, substituierte oder unsubstituierte C₁₋₅, vorzugsweise C₁₋₃, Alkylgruppe bedeutet;
R₂ und R₄ unabhängig eine lineare oder verzweigte, substituierte oder unsubstituierte C₁₋₅, vorzugsweise C₁₋₃, Alkylgruppe bedeuten;
R₃ eine lineare oder verzweigte, substituierte oder unsubstituierte C₁₋₅, vorzugsweise C₁₋₃, Alkylgruppe; eine R₅N(R₆)R₇ Gruppe bedeutet;
R₅ und R₇ unabhängig eine lineare oder verzweigte, substituierte oder unsubstituierte C₁₋₅, vorzugsweise C₁₋₃, Alkylgruppe bedeuten;
R₆ eine lineare oder verzweigte, substituierte oder unsubstituierte C₁₋₅, vorzugsweise C₁₋₃, Alkylgruppe; eine R₈N(R₉)R₁₀ Gruppe bedeutet;
R₈, R₉ und R₁₀ unabhängig eine lineare oder verzweigte, substituierte oder unsubstituierte C₁₋₅, vorzugsweise C₁₋₃, Alkylgruppe bedeuten;
mit der Maßgabe, dass die Zahl von -PO(OH)₂ Gruppen in der allgemeinen Formel (I) nicht größer als 5 ist;
iii) Eintauchen des Holzkörpers in die Sulfatierungs- und Phosphorylierungslösung, vorzugsweise bei einem Druck, welcher höher als ein Atmosphärendruck ist;
iv) Extrahieren des Holzkörpers aus der Sulfatierungs- und Phosphorylierungslösung;
v) Halten des Holzkörpers bei einer Temperatur zwischen 110 °C und 175 °C für einen Zeitraum zwischen 1 Minute und 5 Stunden, wobei am Ende ein sulfatierter und phosphorylierter Holzkörper mit Flammschutzeigenschaften erhalten wird.

2. Verfahren zur Sulfatierung und Phosphorylierung nach Anspruch 1, wobei vor Arbeitsgang v) der aus der Sulfatierungs- und Phosphorylierungslösung extrahierte Holzkörper einem Zentrifugations- und Wärmetrocknungsvorgang unterworfen wird, vorzugsweise bei einer Temperatur zwischen 70 und 90 °C.

3. Verfahren zur Sulfatierung und Phosphorylierung nach Anspruch 1 oder Anspruch 2, wobei am Ende des Arbeitsgangs v) der Holzkörper einem Waschvorgang, vorzugsweise unter erwärmten Bedingungen, und einer Wärmetrocknung, vorzugsweise bei einer Temperatur zwischen 70 und 90 °C, unterworfen wird.

4. Verfahren zur Sulfatierung und Phosphorylierung nach einem der Ansprüche 1 bis 3, wobei vor Arbeitsgang iii) der Holzkörper einem Ausgasungsarbeitsgang bei einem nierdrigen Druck als dem Atmosphärndruck unterworfen wird.

5. Verfahren zur Sulfatierung und Phosphorylierung nach einem der Ansprüche 1 bis 4, wobei die Sulfatierungs- und Phosphorylierungslösung durch Vermischen in der folgenden Reihenfolge von Wasser, Harnstoff, wenigstens einer Verbindung der Formel (I) und Ammoniumsulfamat hergestellt wird.

6. Verfahren zur Sulfatierung und Phosphorylierung nach einem der Ansprüche 1 bis 5, wobei die Sulfatierungs- und Phosphorylierungslösung enthält:
- Wasser in einer Menge zwischen 80 und 25 % Gew./Gew., vorzugsweise 50 und 60 % Gew./Gew.,
- Harnstoff in einer Menge zwischen 10 und 30 % Gew./Gew., vorzugsweise 10 und 20 % Gew./Gew.,
- wenigstens eine Verbindung der Formel (I) in einer Menge zwischen 5 und 30 % Gew./Gew., vorzugsweise 10 und 20 % Gew./Gew., und
- Ammoniumsulfamat in einer Menge zwischen 5 und 30 % Gew./Gew., vorzugsweise 8 und 15 % Gew./Gew.

7. Verfahren zur Sulfatierung und Phosphorylierung nach einem der Ansprüche 1 bis 6, wobei, wenn eine beliebige der Gruppen R, R₁, R₂, R₃, R₄, R₅, R₆, R₇, R₈, R₉, R₁₀, der allgemeinen Formel (I), falls vorhanden, eine substituierte Alkylgruppe bedeutet, der eine oder die mehreren Substituenten unabhängig ausgewählt sind aus -OH, -COOH, -PO(OH)₂,-NH₂, -NHR₁₁, -NR₁₂R₁₃, -Cl, -Br, -F, wobei
R₁₁, R₁₂ und R₁₃ unabhängig eine lineare oder verzweigte, substituierte oder unsubstituierte C₁₋₅, vorzugsweise C₁₋₃, Alkylgruppe bedeuten.

8. Verfahren zur Sulfatierung und Phosphorylierung nach Anspruch 7, wobei, wenn eine beliebige der Gruppen R₁₁, R₁₂ und R₁₃ der allgemeinen Formel (I), falls vorhanden, eine substituierte Alkylgruppe bedeutet, der eine oder die mehreren Substituenten durch die - PO(OH)₂ Gruppe wiedergegeben sind.

9. Verfahren zur Sulfatierung und Phosphorylierung nach einem der Ansprüche 1 bis 8, wobei die Gruppen R₂, R₄, R₅ und R₈, falls vorhanden, unabhängig eine unsubstituierte Alkylgruppe bedeuten.

10. Verfahren zur Sulfatierung und Phosphorylierung nach einem der Ansprüche 1 bis 9, wobei, wenn die Gruppen R₃, R₆, R₇, R₉ und R₁₀, falls vorhanden, unabhängig eine substituierte Alkylgruppe bedeuten, der eine oder die mehreren Substituenten durch die -PO(OH)₂ Gruppe wiedergegeben sind.

11. Verfahren zur Sulfatierung und Phosphorylierung nach einem der Ansprüche 1 bis 10, wobei die wenigstens eine Phosphonsäureverbindung der Formel (I) ausgewählt ist aus: 1-Hydroxyethan-1,1-diphosphonsäure, Hydroxyethyl-imino-bis-(methylen-phosphon)säure, Amino-tris-(methylen-phosphon)säure, Ethylendiamin-tetra-(methylen-phosphon)säure, Diethylentriamin-penta-(methylen-phosphon)säure, (1-Aminoethyliden)-bisphosphonsäure, Oxidronsäure, Pamidronsäure, Alendronsäure, (1-Hydroxy-2-methyl-1-phosphonopropyl)-phosphonsäure, (Aminomethylen)-bisphosphonsäure, 1-Hydroxypentan-1,1-bisphosphonsäure, [(2-Hydroxypropan-1,3-diyl)bis(nitrilodimethan-diyl)]-tetrakisphosphonsäure, Clodronsäure, (Difluormethylen)-bisphosphonsäure, (Dibrommethylen)-bisphosphonsäure, (Hydroxymethan)-bisphosphonsäure.

12. Verfahren zur Sulfatierung und Phosphorylierung nach einem der Ansprüche 1 bis 11, wobei der Holzkörper im Wesentlichen aus Cellulose, Hemicellulose und Lignin besteht.

13. Verfahren zur Sulfatierung und Phosphorylierung nach einem der Ansprüche 1 bis 12, wobei der sulfatierte und phosphorylierte Holzkörper einen LOI zwischen 30 und 90, bevorzugter zwischen 60 und 80, aufweist.

14. Verfahren zur Sulfatierung und Phosphorylierung nach einem der Ansprüche 1 bis 13, wobei der sulfatierte und phosphorylierte Holzkörper physikalische Eigenschaften aufweist, die im Wesentlichen gleich denen eines unbehandelten Holzkörpers sind.

15. Holzkörper mit Flammenschutzeigenschaften, erhalten durch Implementieren des Verfahrens gemäß einem der Ansprüche 1 bis 14.

16. Verwendung einer Verbindung der Formel (I):
PO(OH)₂-R-PO(OH)₂ (I)
wobei
R eine lineare oder verzweigte, substituierte oder unsubstituierte C₁₋₁₀, vorzugsweise C₁₋₅, Alkylgruppe; eine N(R₁) Gruppe; eine R₂N(R₃)R₄ Gruppe bedeutet;
R₁ H, eine lineare oder verzweigte, substituierte oder unsubstituierte C₁₋₅, vorzugsweise C₁₋₃, Alkylgruppe bedeutet;
R₂ und R₄ unabhängig eine lineare oder verzweigte, substituierte oder unsubstituierte C₁₋₅, vorzugsweise C₁₋₃, Alkylgruppe bedeuten;
R₃ eine lineare oder verzweigte, substituierte oder unsubstituierte C₁₋₅, vorzugsweise C₁₋₃, Alkylgruppe; eine R₅N(R₆)R₇ Gruppe bedeutet;
R₅ und R₇ unabhängig eine lineare oder verzweigte, substituierte oder unsubstituierte C₁₋₅, vorzugsweise C₁₋₃, Alkylgruppe bedeuten;
R₆ eine lineare oder verzweigte, substituierte oder unsubstituierte C₁₋₅, vorzugsweise C₁₋₃, Alkylgruppe; eine R₈N(R₉)R₁₀ Gruppe bedeutet;
R₈, R₉ und R₁₀ unabhängig eine lineare oder verzweigte, substituierte oder unsubstituierte C₁₋₅, vorzugsweise C₁₋₃, Alkylgruppe bedeuten;
mit der Maßgabe, dass die Zahl von -PO(OH)₂ Gruppen in der allgemeinen Formel (I) nicht größer als 5 ist;
in einem Verfahren zur Sulfatierung und Phosphorylierung eines Holzkörpers, wobei die Verbindung der Formel (I) als ein Katalysator in der Sulfatierungsreaktion und als ein Phosphorylierungsmittel dient.

## Revendications

1. Procédé de sulfatation et de phosphorylation d'un corps en bois pour conférer des propriétés ignifugeantes au corps en bois comprenant les opérations suivantes :
i) utilisation d'un corps en bois, de préférence d'un corps en bois séché ;
ii) préparation d'une solution de sulfatation et de phosphorylation, de préférence dans des conditions de chauffage, la solution de sulfatation et de phosphorylation comprenant de l'eau, du sulfamate d'ammonium, de l'urée et au moins un composé de formule (I) :
PO(OH)₂-R-PO(OH)₂ (I)
où
R représente un groupe alkyle en C₁₋₁₀, de préférence en C₁₋₅, linéaire ou ramifié, substitué ou non ; un groupe N(R₁) ; un groupe R₂N(R₃)R₄ ;
R₁ représente H, un groupe alkyle en C₁₋₅, de préférence en C₁₋₃, linéaire ou ramifié, substitué ou non ;
R₂ et R₄ représentent indépendamment un groupe alkyle en C₁₋₅, de préférence en C₁₋₃, linéaire ou ramifié, substitué ou non ;
R₃ représente un groupe alkyle en C₁₋₅, de préférence en C₁₋₃, linéaire ou ramifié, substitué ou non ; un groupe R₅N(R₆)R₇ ;
R₅ et R₇ représentent indépendamment un groupe alkyle en C₁₋₅, de préférence en C₁₋₃, linéaire ou ramifié, substitué ou non ;
R₆ représente un groupe alkyle en C₁₋₅, de préférence en C₁₋₃, linéaire ou ramifié, substitué ou non ; un groupe R₈N(R₉)R₁₀ ;
R₈, R₉ et R₁₀ représentent indépendamment un groupe alkyle en C₁₋₅, de préférence en C₁₋₃, linéaire ou ramifié, substitué ou non ;
à condition que le nombre de groupes -PO(OH)₂ dans la formule générale (I) ne soit pas supérieur à 5 ;
iii) immersion du corps en bois dans la solution de sulfatation et de phosphorylation, de préférence à une pression supérieure à la pression atmosphérique ;
iv) extraction du corps en bois de la solution de sulfatation et de phosphorylation ;
v) maintien du corps en bois à une température comprise entre 110 ° et 175 °C pendant une durée comprise entre 1 minute et 5 heures, pour obtenir à la fin un corps en bois sulfaté et phosphorylé doué de propriétés ignifugeantes.

2. Procédé de sulfatation et de phosphorylation selon la revendication 1, dans lequel avant l'opération v) le corps en bois extrait de la solution de sulfatation et de phosphorylation est soumis à une opération d'égouttage et de séchage thermique, de préférence à une température comprise entre 70 et 90 °C.

3. Procédé de sulfatation et de phosphorylation selon la revendication 1 ou la revendication 2, dans lequel à la fin de l'opération v) le corps en bois est soumis à une opération de lavage, de préférence dans une condition de chauffage, et de séchage thermique, de préférence à une température comprise entre 70 et 90 °C.

4. Procédé de sulfatation et de phosphorylation selon l'une quelconque des revendications 1 à 3, dans lequel avant l'opération iii) le corps en bois est soumis à une opération de dégazage à une pression inférieure à la pression atmosphérique.

5. Procédé de sulfatation et de phosphorylation selon l'une quelconque des revendications 1 à 4, dans lequel la solution de sulfatation et de phosphorylation est préparée par mélange, dans l'ordre suivant, d'eau, d'urée, d'au moins un composé de formule (I) et de sulfamate d'ammonium.

6. Procédé de sulfatation et de phosphorylation selon l'une quelconque des revendications 1 à 5, dans lequel la solution de sulfatation et de phosphorylation contient :
- de l'eau en une quantité comprise entre 80 et 25 % p/p, de préférence entre 50 et 60 % p/p,
- de l'urée en une quantité comprise entre 10 et 30 % p/p, de préférence entre 10 et 20 % p/p,
- au moins un composé de formule (I) en une quantité comprise entre 5 et 30 % p/p, de préférence entre 10 et 20 % p/p, et
- du sulfamate d'ammonium en une quantité comprise entre 5 et 30 % p/p, de préférence entre 8 et 15 % p/p.

7. Procédé de sulfatation et de phosphorylation selon l'une quelconque des revendications 1 à 6, dans lequel quand l'un quelconque des groupes R, R₁, R₂, R₃, R₄, R₅, R₆, R₇, R₈, R₉, R₁₀, de la formule générale (I), si présent, représente un groupe alkyle substitué, où le ou les substituants sont indépendamment choisis parmi -OH, -COOH, -PO(OH)₂, -NH₂, -NHR₁₁, -NR₁₂R₁₃, -Cl, -Br, -F, où
R₁₁, R₁₂ et R₁₃ représentent indépendamment un groupe alkyle en C₁₋₅, de préférence en C₁₋₃ linéaire ou ramifié, substitué ou non.

8. Procédé de sulfatation et de phosphorylation selon la revendication 7, dans lequel quand l'un quelconque des groupes R₁₁, R₁₂ et R₁₃ de la formule générale (I), si présent, représente un groupe alkyle substitué, où le ou les substituants sont représentés par le groupe -PO(OH)₂.

9. Procédé de sulfatation et de phosphorylation selon l'une quelconque des revendications 1 à 8, dans lequel les groupes R₂, R₄, R₅ et R₈, si présents, représentent indépendamment un groupe alkyle non substitué.

10. Procédé de sulfatation et de phosphorylation selon l'une quelconque des revendications 1 à 9, dans lequel les groupes R₃, R₆, R₇, R₉ et R₁₀, si présents, représentent indépendamment un groupe alkyle substitué, où le ou les substituants sont représentés par le groupe -PO(OH)₂.

11. Procédé de sulfatation et de phosphorylation selon l'une quelconque des revendications 1 à 10, dans lequel ledit au moins un composé phosphonique de formule (I) est choisi parmi : l'acide 1-hydroxyéthane-1,1-bisphosphonique, l'acide hydroxyéthyl-imino-bis-(méthylène-phosphonique), l'acide amino-tris-(méthylène-phosphonique), l'acide éthylènediamine-tétra-(méthylène-phosphonique), l'acide diéthylène-triamine-penta-(méthylène-phosphonique), l'acide (1-aminoéthylidène)-bisphosphonique, l'acide oxydronique, l'acide pamidronique, l'acide alendronique, l'acide (1-hydroxy-2-méthyl-1-phosphonopropyl)-phosphonique, l'acide (aminométhylène)-bisphosphonique, l'acide 1-hydroxypentane-1,1-bisphosphonique, l'acide [(2-hydroxypropan-1,3-diyl)-bis(nitrilodiméthane-diyle)]-tétrakis-phosphonique, l'acide clodronique, l'acide (difluorométhylène)-bisphosphonique, l'acide (dibromométhylène)-bisphosphonique, l'acide (hydroxyméthane)-bisphosphonique.

12. Procédé de sulfatation et de phosphorylation selon l'une quelconque des revendications 1 à 11, dans lequel le corps en bois est essentiellement constitué de cellulose, hémicellulose et lignine.

13. Procédé de sulfatation et de phosphorylation selon l'une quelconque des revendications 1 à 12, dans lequel le corps en bois sulfaté et phosphorylé a une valeur L.O.I. comprise entre 30 et 90, plus préférablement entre 60 et 80.

14. Procédé de sulfatation et de phosphorylation selon l'une quelconque des revendications 1 à 13, dans lequel le corps en bois sulfaté et phosphorylé a des propriétés physiques essentiellement égales à celles d'un corps en bois non traité.

15. Corps en bois doué de propriétés ignifugeantes obtenu par mise en œuvre du procédé selon l'une quelconque des revendications 1 à 14.

16. Utilisation d'un composé de formule (I) :
PO(OH)₂-R-PO(OH)₂ (I)
où
R représente un groupe alkyle en C₁₋₁₀, de préférence en C₁₋₅, linéaire ou ramifié, substitué ou non ; un groupe N(R₁) ; un groupe R₂N(R₃)R₄ ;
R₁ représente H, un groupe alkyle en C₁₋₅, de préférence en C₁₋₃, linéaire ou ramifié, substitué ou non ;
R₂ et R₄ représentent indépendamment un groupe alkyle en C₁₋₅, de préférence en C₁₋₃, linéaire ou ramifié, substitué ou non ;
R₃ représente un groupe alkyle en C₁₋₅, de préférence en C₁₋₃, linéaire ou ramifié, substitué ou non ; un groupe R₅N(R₆)R₇ ;
R₅ et R₇ représentent indépendamment un groupe alkyle en C₁₋₅, de préférence en C₁₋₃, linéaire ou ramifié, substitué ou non ;
R₆ représente un groupe alkyle en C₁₋₅, de préférence en C₁₋₃, linéaire ou ramifié, substitué ou non ; un groupe R₈N(R₉)R₁₀ ;
R₈, R₉ et R₁₀ représentent indépendamment un groupe alkyle en C₁₋₅, de préférence en C₁₋₃, linéaire ou ramifié, substitué ou non ;
à condition que le nombre de groupes -PO(OH)₂ dans la formule générale (I) ne soit pas supérieur à 5 ;
dans un procédé de sulfatation et de phosphorylation d'un corps en bois, le composé de formule (I) agissant comme un agent catalytique dans la réaction de sulfatation et comme un agent de phosphorylation.
